# EUROPEAN PATENT APPLICATION

(11) **EP 4 495 416 A1**
(43) Date of publication of application: **22.01.2025**
(21) Application number: 23185931.5
(22) Date of filing: 17.07.2023
(51) Int. Cl.: F03D 1/06, F03D 80/30

(54) **SPAR CAP STRUCTURES COMPRISING LIGHTNING CONNECTOR ASSEMBLIES AND CONDUCTIVE ASSEMBLIES**

(71) Applicant: LM Wind Power A/S, 6000 Kolding (DK)
(72) Inventor: JØRGENSEN, Jeppe Bjørn, 6000 KOLDING (DK); RAZEGHI, Rama, 6000 KOLDING (DK); REDMOND-GRAY, Dylan Robert, DK-6000 KOLDING (DK); ALKEMADE, Harry, 1703DH HEERHUGOWAARD (NL); MANIKARNIKA, Kiran, DK-6000 KOLDING (DK)
(74) Representative: ZBM Patents - Zea, Barlocci & Markvardsen

(57) **Abstract**

In a first aspect, a spar cap structure for a wind turbine blade is provided. The spar cap structure comprises a main body, a lightning connector assembly and a conductive assembly. The main body comprises a first side and a second side, wherein the main body comprises a plurality of layers of one or more carbon fiber components. The lightning assembly is arranged at one of the sides of the main body and extends a height from an outer end to an inner end in a direction substantially parallel to the thickness of the main body. The conductive assembly extends from the main body to the lightning connector assembly to electrically connect the main body to the lightning connector assembly. In a further aspect, a wind turbine blade comprising one or more spar cap structures according to any of the examples herein is provided. In yet a further aspect, a method for manufacturing a spar cap structure and a wind turbine blade according to any of the examples herein is provided.

## Description

The present disclosure relates to spar cap structures comprising main bodies, lightning connector assemblies, and conductive assemblies. The present disclosure further relates to wind turbine blades comprising the spar cap structures, and methods for manufacturing these spar cap structures and these wind turbine blades.

### BACKGROUND

Modern wind turbines are commonly used to supply electricity to the electrical grid. Wind turbines of this kind generally comprise a rotor with a rotor hub and a plurality of wind turbine blades. The rotor is set into rotation under the influence of the wind on the blades. The rotation of the rotor shaft drives the generator rotor either directly ("directly driven") or through the use of a gearbox. The gearbox (if present), the generator, and other systems are usually mounted in a nacelle on top of a wind turbine tower.

Wind turbine blades are generally made from fiber-reinforced polymers or plastics (FRP's), which are composite materials consisting of a polymer matrix and reinforced with fibers. The fibers are usually glass or carbon and provide longitudinal stiffness and strength.

Wind turbine blades are commonly manufactured by joining two blade shell parts made from fiber-reinforced polymers, e.g. glass or carbon fiber reinforced polymers. These blade shell parts may be molded using a resin infusion technology or a prepreg technology. In resin infusion technology, fibers are placed in a mold and then, the resin is injected into the mold cavity under pressure. This resin fills the volume between the cavity, and then, the resin is cured or hardened. Examples of resin infusion technology may be Resin Transfer Molding (RTM) or Vacuum Assisted Resin Transfer Molding (VARTM). In VARTM, the resin is injected under a vacuum or pressure lower than atmospheric.

A load-carrying structure may be arranged between the pressure side blade shell part and the suction side blade shell part. The load-carrying structure may comprise a reinforcing structure joined to opposing spar caps of the respective blade shell part. The spar caps may be embedded within the composite laminate materials of the blade shell parts or laminated to an inner surface of the blade shell. The spar caps are used to receive the reinforcing structure, e.g. a pair of opposing flanges, and to structurally reinforce the wind turbine blade. The spar caps provided in the blade shell parts typically increase the stiffness, buckling resistance, and strength of the wind turbine blade. The spar caps extend along a longitudinal length of the wind turbine blade.

Spar caps may be constructed of various materials, including glass fiber laminate composites and carbon fiber laminate composites. For example, glass fiber fabrics or carbon fiber fabrics may be employed for manufacturing spar caps. In order to increase the mechanical properties, pultruded composites may alternatively be used. Pultruded composites or pultrusions are fiber reinforcement materials that are impregnated with resin and pulled through a heated stationary die such that the resin cures and undergoes polymerization. Pultruded composites may comprise carbon fiber pultrusions and/or glass fiber pultrusions. As such, the pultrusion process is typically characterized by a continuous process that produces composite parts having a constant cross-section. Thus, a plurality of pultrusions can be vacuum infused together in a mold to form the spar caps. The pultrusions are prefabricated which allows for a high level of quality and better fiber configuration and homogeneity.

In recent times, there has been a trend to increase the size of wind turbine blades to capture more wind. Larger blades typically involve higher mechanical requirements. Furthermore, manufacturing complexity also increases with larger blades. Carbon fibers, e.g. carbon fiber pultrusions, offer a better stiffness/weight ratio and fatigue properties than glass fibers, e.g. glass fiber pultrusions. Accordingly, carbon fibers, e.g. carbon fiber pultrusions, may be used to achieve these high mechanical requirements. To this end, carbon fiber pultrusions may be employed for manufacturing spar cap structures.

Furthermore, as wind turbine blades increase in size, the risk of lightning striking the wind turbine blades increases. Wind turbine blades may be provided with lightning receptors to capture the lightning strike. These lightning receptors are electrically connected to a down conductor arranged within the wind turbine blade to conduct the lightning current to the ground. These lightning receptors are arranged outside spar cap structures made from carbon fiber components. The lightning receptors are generally arranged in the glass fiber of the blade shell part, e.g. in core structures outside the spar cap structures.

The electrical conductivity of carbon fibers is greater than that of glass fibers. Lightning striking carbon fibers may cause the carbon fiber to conduct the lightning current. However, the resin that bonds carbon fiber layers, e.g. several carbon fiber pultrusions, comprises a lower electrical conductivity. Accordingly, the resin and any gaps between the carbon fiber layers may hinder the lightning current from flowing between carbon fiber layers, e. g. carbon fiber pultrusions. This may cause a risk of internal flashover between carbon fiber layers which may potentially damage the material. To this end, thin conductive veils may be provided between layers of carbon fiber components, e.g. between carbon fiber pultrusions. These thin conductive veils comprise an electrical conductivity greater than that of the resin. These conductive veils may be electrically connected to the down conductor.

Mounting the lightning receptors in the core structures and connecting them to the conductive veils arranged between the carbon fiber components, e.g. carbon fiber pultrusions, of the spar cap is complex and requires several elements. Copper elements are generally at least partially arranged on the inner side of the core structures, i.e. sticking out from the spar cap. Some of these copper elements may be used for connecting the conductive veils to the down conductor. These copper elements are generally arranged on the inner side of the blade shell and apart from the spar cap.

For example, structures known as lightning protection ears may be made from copper meshes. These lightning protection ears may stick out from the spar cap and may be arranged on the inner side of the core structure. Using these lightning protection ears may involve the use of interconnecting cables connected to the lightning protection ears through copper discs bonded to the lightning protection ears. These interconnecting cables may connect the lightning protection ears to the down conductor.

The conductive veils may be bonded to the copper mesh after manufacturing the spar cap. These copper meshes may get damaged or disconnected from the spar cap when the spar cap is transferred from the spar cap mold to the blade shell mold. Furthermore, aligning these copper meshes with the shell, e.g. core structure, is difficult. In addition, since the copper meshes or lightning protection ears are on the inner side of the core structure, damages and misalignments of the copper mesh or of the lightning protection ears are difficult to detect by inspecting from outside the wind turbine blade, e.g through an ultrasonic inspection. Furthermore, the adhesion between the lightning protection ears or the copper meshes with the blade shell is generally poor. The adhesion of the copper disc and the copper mesh is also generally poor.

In other examples, the copper components are arranged inside the core structure. Mounting these components, on the core structure, requires precise machining. These operations are thus complex and time-consuming. Furthermore, machining the core structure for placing the copper components and the lightning receptor of the lightning protection system may weaken the core structure. The structural integrity of the wind turbine blade may thus be negatively affected. In these examples, the connection between the conductive veils and the copper components is also complex. The adhesion of the copper components and the core structure may also be poor.

The present disclosure provides examples of systems and methods that at least partially resolve some of the aforementioned disadvantages.

### SUMMARY

In a first aspect, a spar cap structure for a wind a turbine blade is provided. The spar cap structure comprises a main body, a lightning connector assembly, and a conductor assembly.

The main body comprises a first side and a second side. Furthermore, the main body comprises a plurality of layers of one or more carbon fiber components. Each of these layers is arranged one on top of the other to define a thickness of the main body between the first and the second sides.

The lightning connector assembly is arranged at one of the sides of the main body. The lightning assembly extends a height from an outer end to an inner end in a direction substantially parallel to the thickness of the main body. The outer end is configured to be connected to a lightning receptor and the inner end is configured to be connected to a down conductor of a lightning protection system of a wind turbine blade.

The conductive assembly extends from the main body to the lightning connector assembly to electrically connect the main body to the lightning connector assembly.

According to this aspect, elements of the lightning receptors may be integrated within the spar cap structure. Consequently, the accuracy and precision of the manufacturing operations may be increased. The use of some lightning protection elements, e.g. lightning protection ears or copper discs, is eliminated. As a result, problems related to the arrangement and the adhesion of these lightning protection elements in the blade shell are overcome. Furthermore, as the lightning connector assembly is arranged within the spar cap structure (and not in the core structures adjacent to the spar cap), the lightning connector assembly may be inspected from outside the wind turbine blade. Ultrasonic methods may thus be used. This may allow for increasing the reliability of blade manufacturing.

As the lightning connector assembly is within the spar cap structure, the electrical connections between the main body having carbon fibers and the lightning connector assembly are simplified. The electrical connection between the main body and the lightning connector assembly through the conductive assembly may thus be performed before forming the whole wind turbine blade. This allows for reducing the number of elements and prevents performing some post-operation tasks, such as machining the blade shell to mount the typical copper disc and soldering operations to connect the main body to the lighting receptors. Electrical current may thus flow from the main body having the carbon fibers through the conductive assembly to the lightning connector assembly. The electrical current may then be conducted towards the down conductor.

Furthermore, mounting the lightning receptors is simplified, since the lightning receptors may be attached to the outer end of the lightning connector assembly. Accordingly, it is not required to insert the lightning receptors through the whole thickness of the core structure from outside the spar cap structure. The lightning system protection may thus be assembled in an easier manner.

Furthermore, handling operations for placing the spar cap in the blade shell mold may be simplified. De-attaching the lightning elements such as lightning protection ears from the blade shell, e.g. from the spar cap or from the core structure, may be further prevented.

In a further aspect, a wind turbine blade extending in a lengthwise direction is provided. The wind turbine blade comprises an upper blade shell part and a lower blade shell part joined to the upper blade shell part. The wind turbine blade further comprises a reinforcing structure between the upper blade shell part and the lower blade shell. In addition, the upper blade shell part and/or the lower blade shell part comprises a spar cap structure according to any of the examples herein disclosed.

In yet a further aspect, a method for manufacturing a spar cap structure is provided. The method comprises forming a main body by stacking a plurality of layers of one or more carbon fiber components to define a thickness between a first side and a second side of the main body.

In addition, the method comprises arranging a lightning connector assembly at one side of the sides of the main body. The lightning connector assembly extends a height from an outer end to an inner end in a direction substantially parallel to the thickness of the main body. The outer end is configured to be connected to a lightning receptor and the inner end is configured to be connected to a down conductor of a lightning protection system of a wind turbine blade.

The method further comprises arranging a conductive assembly to extend from the main body to the lightning connector assembly for electrically connecting the main body to the lightning connector assembly. In addition, the method comprises bonding the lightning connector assembly to the main body.

In yet a further aspect, a method for manufacturing a wind turbine blade according to any of the examples herein disclosed is provided. The method for manufacturing a wind turbine blade comprises forming the upper blade shell part and the lower blade shell.

Forming the upper blade shell part and/or the lower blade shell part comprises arranging the spar cap structure on an outer layer laid in a blade shell part mold, and bonding the spar cap structure to the outer layer.

The method for manufacturing the wind turbine blade further comprises joining the reinforcing structure to the upper blade shell part and to the lower blade shell part such that the reinforcing structure is arranged between the upper blade shell part and the lower blade shell part, and joining the upper blade shell part to the lower blade shell part.

Advantages derived from these aspects may be similar to those mentioned regarding the first aspect.

### BRIEF DESCRIPTION OF THE DRAWINGS

Non-limiting examples of the present disclosure will be described in the following, with reference to the appended drawings, in which:
Figure 1 illustrates a perspective view of a wind turbine according to one example;
Figure 2 shows a perspective view of a wind turbine blade according to one example;
Figure 3 shows a cross-sectional view of a wind turbine blade according to one example of the present disclosure;
Figure 4A schematically represents a cross-sectional view of a spar cap structure arranged in a wind turbine blade according to an example of the present disclosure;
Figure 4B schematically represents a cross-sectional view of a spar cap structure arranged in a wind turbine blade according to another example of the present disclosure;
Figure 4C schematically represents a cross-sectional view of a spar cap structure arranged in a wind turbine blade according to another example of the present disclosure;
Figure 5 schematically represents an isometric view of a part of a spar cap structure according to one example of the present disclosure;
Figure 6A and 6B schematically represent examples of a part of spar cap structures according to one example of the present disclosure;
Figure 7A and 7B schematically represent examples of conductive elements according to the present disclosure;
Figure 8A and 8B schematically represent examples of an isometric view of a part of a spar cap structure according to the present disclosure;
Figure 9 is a block diagram of a method for manufacturing a spar cap structure according to one example of the present disclosure; and
Figure 10 is a block diagram of a method for manufacturing a wind turbine blade according to one example of the present disclosure.

### DETAILED DESCRIPTION OF EXAMPLES

In these Figures, the same reference signs have been used to designate matching elements.

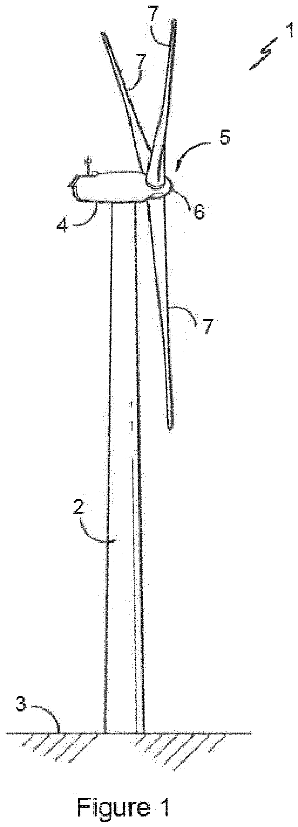

Figure 1 illustrates a perspective view of one example of a wind turbine 1. As shown, the wind turbine 1 includes a tower 2 extending from a support surface 3, a nacelle 4 mounted on the tower 2, and a rotor 5 coupled to the nacelle 4. The rotor 5 includes a rotatable hub 6 and at least one wind turbine blade 7 coupled to and extending outwardly from the rotor hub 6. For example, in the illustrated example, the rotor 5 includes three wind turbine blades 7. However, in an alternative example, the rotor 5 may include more or less than three blades 7. Each wind turbine blade 7 may be spaced from the rotor hub 6 to facilitate rotating the rotor 5 to enable kinetic energy to be transferred from the wind into usable mechanical energy, and subsequently, electrical energy. For instance, the rotor hub 6 may be rotatably coupled to an electric generator positioned within the nacelle 4 or forming part of the nacelle to permit electrical energy to be produced.

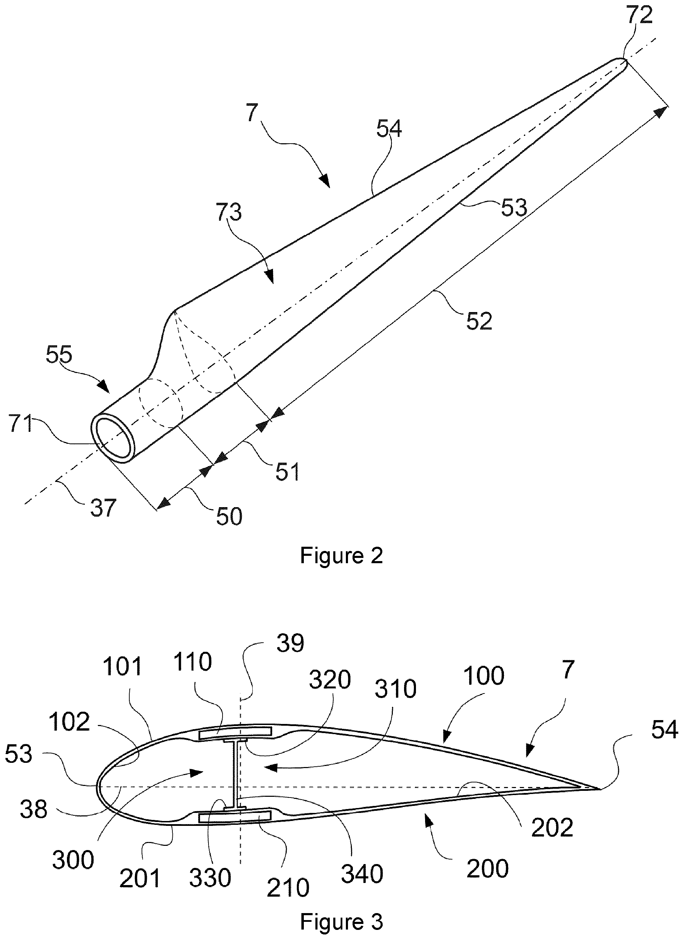

Figure 2 illustrates an example of a wind turbine blade 7. The wind turbine blade 7 extends in a longitudinal direction or lengthwise direction 37 from a blade root end 71 to a blade tip end 72. The blade 7 comprises a blade root region or portion 50 closest to the rotor hub, a profiled or an airfoil portion 52 furthest away from the rotor hub and a transition portion 51 between the blade root portion 50 and the airfoil portion 52.

The blade 7 comprises a leading edge 53 facing the direction of rotation of the blade 7 when mounted on the rotor hub, and a trailing edge 54 facing the opposite direction of the leading edge 53.

The airfoil portion 52 has a shape designed to generate lift, whereas the blade root portion 50 has a circular or elliptical cross-section for structural considerations and easy mounting of the blade to the rotor hub. The diameter or the chord of the blade root portion 50 may be constant along the entire blade root portion 50. At the transition portion 51, the profile gradually changes from the circular or elliptical cross-section of the blade root portion 50 to the airfoil profile of the airfoil portion 52. The wind turbine blade 7 may be connected to the rotor hub through a blade root attachment portion 55.

The wind turbine blade 7 comprises a blade shell 73. The blade shell 73 comprises an outer side or surface that defines the external shape of the blade, e.g. the outer shape at the blade root portion and the outer shape at the airfoil portion. The blade shell 73 also comprises an inner side or surface that defines the internal volume of the blade and faces a load-carrying structure (not shown). The blade shell 73 may be made of fiber-reinforced polymer or plastics, e.g. glass fiber and/or carbon fiber.

The blade shell may be formed by a plurality of blade shell parts. The plurality of blade shell parts may be joined together to form the blade shell. The blade shell parts may be formed and then joined according to any of the examples herein disclosed. Resin infusion technology, e.g. RTM or VARTM, or prepreg technology may be used for manufacturing the blade shell parts.

In some examples, the blade shell comprises a lower side blade shell part and an upper blade shell part. The lower side blade shell may be a pressure side blade shell part. The upper blade shell part may be a suction side blade shell part. The lower side blade shell part may be joined to the upper side blade shell part along joining lines along the leading edge 53 and the trailing edge 54. Each of these blade shell parts may be manufactured in a mold and then joined together to define the entire blade shell of the wind turbine blade 7. A reinforcing structure is arranged between the lower side blade shell part and the upper side blade shell part.

Figure 3 shows a cross-sectional view of a wind turbine blade 7 according to one example of the present disclosure. A suction side blade shell part or upper blade shell part 100, and a pressure side blade shell part or lower blade shell part 200 extend from the leading edge 53 to the trailing edge 54. The wind turbine blade 7 further comprises a chord line 38 between the leading edge 53 and the trailing edge 54. The chord line 38 extends in an edgewise direction or chordwise direction. A flapwise direction 39 is substantially perpendicular to the chord line 38. The upper blade shell part 100 and the lower blade shell part 200 are joined, e.g. bonded, together along the leading edge 53 and the trailing edge 54.

The upper blade shell part 100 comprises an upper outer layer 101 and an upper inner layer 102. The upper outer layer 101 defines an outer shape of the upper blade shell part 100 and the upper inner layer 102 defines an inner shape of the upper blade shell part 100. The upper outer layer 101 and the upper inner layer 102 may comprise glass fiber laminates. For example, one or more glass fiber laminates may be arranged to form the upper outer layer 101 and/or the upper inner layer 102. The fibers, e.g. glass fibers may be oriented bidirectionally to enhance the torsional stiffness of the blade 7. In other examples, the fibers may be arranged unidirectionally. In further examples, the upper layers 101 and/or 102 comprise laminates with unidirectional fibers and laminates with bidirectional fibers.

The upper blade shell part 100 of this example comprises an upper spar cap structure 110 embedded between the upper outer layer 101 and the upper inner layer 102. The upper spar cap structure 110 is thus arranged between the upper outer layer 101 and the upper inner layer 102. The upper spar cap structure 110 structurally reinforces the upper blade shell part 100.

A core structure may be arranged between the upper outer layer 101 and the upper inner layer 102 in some parts of the upper blade shell part 100. For example, a core structure may extend a portion between the upper spar cap structure 110 and the leading edge. Additionally, or alternatively, a core structure may extend a portion between the upper spar cap structure 110 and the trailing edge 54. The core structure generally increases the thickness of the blade shell part so as to improve the stiffness without an excessive weight increase. The core structure may be made from a lightweight material such as balsa wood or polymer foam.

The lower blade shell part 200 may be manufactured like the upper blade shell part 100. As described with respect to the upper blade shell part 100, the lower blade shell part 200 comprises a lower outer layer 201 and a lower inner layer 202. The lower outer layer 201 and/or the lower inner layer 202 may comprise bidirectional glass fibers. A lower spar cap structure 210 is embedded between the lower outer layer 201 and the lower inner layer 202.

The upper spar cap structure 110 and the lower spar cap structure 210 of this example cross the flapwise direction 39. The spar cap structures 110 and 210 faces each other. The spar cap structures 110 and 210 may extend a length along the spanwise direction 37 of the wind turbine blade. The length of the spar cap structures may be greater than 90% of the entire length of the wind turbine blade.

The spar cap structures 110 and 210 may be according to any of the examples herein. The spar cap structures of this example comprise a main body comprising carbon fibers. The carbon fibers are arranged to form layers of carbon fiber components.

In some examples, the main body may comprise carbon fiber fabric layers. Layers formed from carbon fiber fabrics may thus be arranged one on top of the other to define the thickness of the main body. In these examples, the carbon fiber components are carbon fiber fabrics.

In other examples, the main body may comprise a plurality of carbon fiber pultrusions. The carbon fiber pultrusions may be arranged forming several rows of carbon fiber pultrusions. A plurality of pultrusions may be arranged side by side to form the row of carbon fiber pultrusions. In these examples, the carbon fiber components are carbon fiber pultrusions.

The spar cap structures 110 and 210 of this figure comprise a lightning connector assembly arranged at one side of the main body and a conductive assembly extending from the main body to the lightning connector assembly. An electrical path may thus be created from the main body to the lightning connector assembly. The electrical connection of the spar cap to the down conductor may thus be easily performed. The conductive assembly may comprise metal conductive elements and/or carbon fiber elements.

The spar cap structures 110 and 210 may be prefabricated. The main body, the lightning connector assembly and the metal conductive assembly may be bonded together, e.g. infused together, before being placed on the blade shell mold for manufacturing the corresponding blade shell part. Prefabricating the spar cap structures 110 and 210 simplifies the electrical connection between the main body having carbon fibers and the lightning conductor assembly.

The wind turbine blade 7 comprises a reinforcing structure 300 arranged between the upper blade shell part 100 and the lower blade shell part 200. The reinforcing structure 300 provides stiffness to the wind turbine blade. The reinforcing structure 300 comprises a first reinforcing beam 310 arranged between the upper spar cap structure 110 and the lower spar cap structure 210. In further examples, the reinforcing structure comprises a first reinforcing beam and a second reinforcing beam.

The first reinforcing beam 310 of this example extends a length along the spanwise direction 37. The first reinforcing beam 310 may substantially extend between the root portion and the tip portion. The length of the first reinforcing beam 310 may correspond to the length of the spar cap structures 110 and 210.

The first reinforcing beam 310 comprises a web 340 extending between an upper flange 320 and a lower flange 330. The upper flange 320 of the first reinforcing beam 310 is joined to the upper blade shell part 100. The upper flange 320 is joined, e.g. bonded, to the upper inner layer 102 at the region of the upper spar cap structure 110. Similarly, the lower flange 330 is joined to the lower inner layer 202 at the region of the lower spar cap structure 210. In this example, the first reinforcing beam 310 and the spar cap structures 110 and 210 form the load-carrying structure of the wind turbine blade that serves to withstand loads applied to the wind turbine blade.

In this example, the first reinforcing beam 310 comprises a single web. However, in other examples, the first reinforcing beam 310 may comprise two webs extending between the flanges 320 and 330. This configuration may be generally known as a spar box configuration.

An adhesive layer may be arranged between the flanges 320 and 330 and the corresponding inner layer 102 and 202. The adhesive layers join the flanges 320 and 330 to the blade shell parts 100 and 200. The first reinforcing beam 310 may thus be bonded to the upper blade shell part 100 and to the lower blade shell part 200. The spar cap structures 110, 210 are arranged between the corresponding flanges 320, 330 and the outer layer 101, 201.

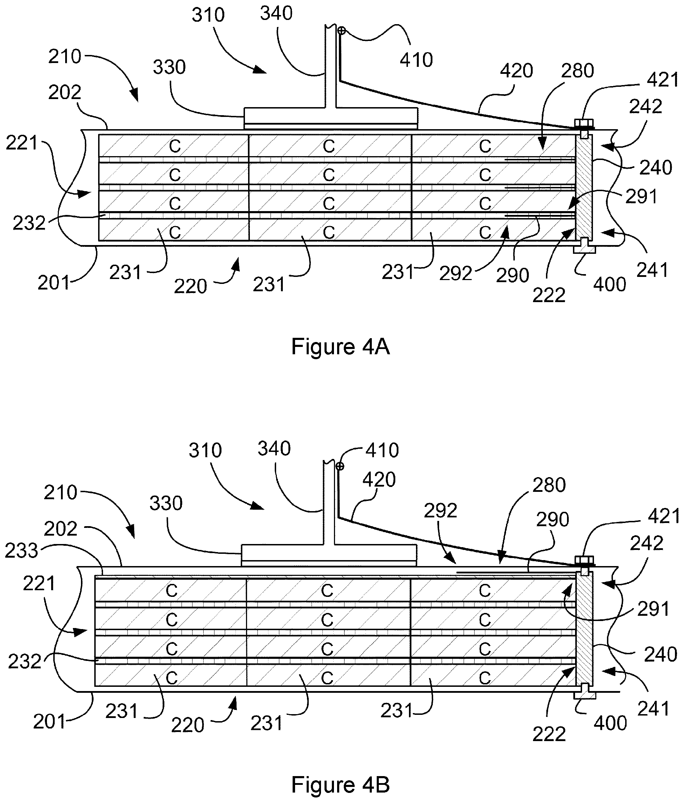

Figure 4A schematically represents a cross-sectional view of a spar cap structure 210 arranged in a wind turbine blade according to an example of the present disclosure. This figure shows a spar cap structure arranged in the lower blade shell part (a lower spar cap), however, the spar cap arranged within the upper blade shell part (an upper spar cap) may be according to any example of lower spar caps herein disclosed.

In this example, the spar cap structure 210 is arranged between the lower outer layer 201 and the lower inner layer 202. The spar cap structure comprises a main body 220 extending between a first side 221 and a second side 222. In this example, the first side 221 is a leading edge side and the second side 222 is a trailing edge side; however, in other examples, may be the opposite. The main body 220 comprises a thickness extending in a direction substantially perpendicular to the flapwise direction 39, i.e. extending between the lower outer layer 201 and the lower inner layer 202.

The main body 220 is formed by a plurality of layers of carbon fiber components arranged one on top of the other. In this example, the carbon fiber components are carbon fiber pultrusions 231. The main body 220 comprises rows of carbon fiber pultrusions 231. The main body 220 of this example comprises four rows of carbon fiber pultrusions 231, each of them having three carbon fiber pultrusions 231. In some examples, the number of carbon fiber pultrusions 231 may vary along the spanwise direction 37 of the blade. The main body 220 may comprise any suitable number of carbon fiber pultrusions 231. In other examples, the layers may be formed by directly placing fibers, e.g. in the form of fabrics.

The carbon fiber pultrusions 231 of this example are plates. The width of the pultrusion plates is several times its thickness, for example, greater than ten times. In some examples, the pultrusion plates comprise a width between 20 mm and 300 mm and a thickness between 1 mm and 6 mm, e.g. 5 mm. In other examples, the pultrusions comprise other suitable cross-sectional shapes, e.g. a rectangular cross-section.

The main body 220 may extend a body length in a direction parallel to the spanwise or lengthwise direction 37 of the wind turbine blade along a length of the corresponding spar cap structure 210. In some examples, the length of the pultrusions of each row or layer varies along the spanwise direction so as to form a stepwise configuration. In further examples, some pultrusions of one row or layer may extend the entire length of the spar cap structure.

The main body 220 of this example is made from carbon fiber pultrusions 231. The carbon fibers of these pultrusions are arranged in a unidirectional configuration. In other examples, the main body may have a hybrid configuration: carbon fiber pultrusions and other types of fiber pultrusions, e.g. glass fiber pultrusions and/or aramid fiber pultrusions. In some examples, the carbon fiber pultrusions may comprise copper portions. For example, the copper portions may be arranged at each side of the carbon fiber pultrusions. These copper portions may enhance the electrical connectivity of the carbon fiber pultrusions.

The main body 220 of this example comprises a conductive foil or veil 232 arranged between two consecutive rows of pultrusions. The conductive veil 232 may extend at least the width of the layers or rows of carbon fiber pultrusions 231. In this example, the conductive veils 232 extend from the first side 221 to the second side 222. In some examples, the conductive veil 232 comprises a thickness of less than 0.5 mm, e.g. 0.05 mm and 0.45 mm.

In some examples, the conductive veil 232 may comprise carbon fibers and/or metal, e.g. copper and/or steel. In some examples, the conductive veil 232 comprises carbon fibers, e.g. in the form of carbon fiber fabric, and/or metal conductive wires. The carbon fibers may be arranged in a biaxial configuration. Additionally, or alternatively, the conductive veil 232 may comprise copper filaments. In further examples, the conductive veil 232 may comprise a hybrid fiber configuration, such as glass/carbon fiber fabric or woven material.

A resin material may be arranged between two consecutive layers or rows of carbon fiber pultrusions 231. The electrical conductivity of the conductive veil 232 is greater than the electrical conductivity of the resin material.

In this example, each conductive veil 232 is sandwiched between two consecutive carbon fiber pultrusions. Alternatively, or additionally, a conductive veil 232 or a copper mesh may be arranged on top and/or on the bottom of the main body 220.

The spar cap structure 210 further comprises a lightning connector assembly 240. In this example, the lightning connector assembly 240 is arranged at the second side 222 of the main body, i.e. at the trailing edge side of the main body 220. In other examples, the lightning connector assembly 240 may be arranged at the leading edge side.

The lightning connector assembly 240 extends a height from an outer end 241 to an inner end 242 in a direction substantially parallel to the thickness of the main body 220. The outer end 241 is arranged adjacent to the lower outer layer 201 and the inner end 242 is adjacent to the lower inner layer 202. In this example, the height of the lightning connector assembly 240 substantially corresponds to the thickness of the main body 220. In other examples, the height of the lightning connector assembly 240 may be greater or smaller than the thickness of the main body 220.

In some examples, the lightning connector assembly 240 comprises a plurality of elongated connectors distributed along a lengthwise direction 37 of the spar cap structure 210. The height of the elongated connectors, i.e. between the outer end 241 and the inner end 242, is greater than a length along the lengthwise direction 37. In other examples, the lightning connector assembly 240 comprises a strip connector or a plurality of strip connectors extending a length along the lengthwise direction 37 of the spar cap structure 210. The length of the strip connector is greater than its height. The lightning connector assembly 240 may comprise a metallic conductor, e.g. copper.

In this example, a lightning receptor 400 is connected to the outer end 241 of the lightning connector assembly 240. In this example, the lightning receptor 400 passes through the outer layer 201 and is inserted into a hole arranged at the outer end 241 of the lightning receptor 400. The lightning receptor 400 is thus electrically coupled to the lightning connector assembly 240. The hole may be a threaded hole to thread an upper end of the lightning receptor 400. The lightning receptor 400 of this example comprises an outer portion arranged outside the wind turbine blade to capture lightning strikes. The lightning receptor 400 of this figure comprises a substantial T-shape.

The wind turbine blade of this example further comprises a down conductor 410 extending in a direction substantially parallel to the lengthwise direction 37. The down conductor 410 may substantially extend to the entire length of the wind turbine blade 7. The down conductor 410 is configured to be electrically coupled to the ground so as to conduct lightning currents to the ground.

In this example, the down conductor 410 is supported by the web 340 of the first reinforcing beam 310. In other examples, the down conductor 410 may be coupled to the lower flange 330 or the upper flange of the first reinforcing beam 310.

In this example, a cable 420 electrically connects the lightning connector assembly 240 to the down conductor 410. One end of this cable 420 is attached to the inner end 242 of the lightning connector assembly 240, e.g. coiled around a fastener 421 screwed on the inner end 242 of the lightning connector assembly 240. The opposite end of the cable 420 is attached to the down conductor 410.

As can be seen in this figure, the lightning receptor 400 contacts the lightning connector assembly 240. A current path may thus be created towards the down conductor 410.

In some examples, the wind turbine blade 7 comprises a plurality of lightning receptors 400 connected to the outer end 241 of the lightning connector assembly 240. A plurality of cables 420 may connect the inner end 242 of the lightning connector assembly 240 to the down conductor 410. Each of the cables 420 may be associated with a lightning receptor 400.

The spar cap structure 210 additionally comprises a conductive assembly 280. The conductive assembly 280 extends from the main body 220 to the lightning connector assembly 240. The metal conductive assembly 280 of this example comprises conductive elements 290 extending between a first end 291 and a second end 292. In this example, the first end 291 is connected to the lightning connector assembly 240 and the second end 292 is connected to the layers of carbon fiber components. In this example, the conductive elements 290 comprises metal conductive elements. In other examples, the conductive elements 290 may comprise carbon fibers.

The conductive veils 232 may thus be electrically connected to the down conductor of the wind turbine blade through the conductive assembly 280 and the lightning connector assembly 240 in a simple manner. The electrical connection between the conductive veils 232 and the lightning protection system may thus be performed before forming the whole wind turbine blade. This allows for reducing the number of elements and prevents performing some post-operation tasks, such as machining the blade shell to mount the typical copper disc.

In this example, the conductive elements 290 are distributed along the thickness of the main body 220. In this figure, a conductive element 290, e.g. a metal conductive element, is arranged between two rows of carbon fiber pultrusions 231. The second end 292 of the conductive elements 290 of this example is embedded into the corresponding conductive veil 232. The conductive elements 290 may thus be electrically connected to the conductive veils 232. A current path may thus be established between the main body 220 and the lightning connector assembly 240. In some examples, the first and the second ends of the conductive elements 290 may be integrated within the conductive veil 232. In these examples, a portion of the conductive veil 232 protrudes from the body 220.

In some examples, the conductive assembly 280 may further comprise a plurality of conductive elements, e.g. metal conductive elements, distributed along a lengthwise direction 37 of the spar cap structure. The electrical connection between the main body and the lightning connector assembly 240 may thus be further improved. The conductive elements may thus be distributed at several heights relative to the main body 220 and at several positions along the lengthwise direction 37.

In some examples, one conductive element 290 may comprise a metal conductive element. The conductive element may comprise a thread of conductive wires, e.g. copper wires. The second end 292 of the thread of conductive wires may be embedded into the conductive veil 232. In other examples, one conductive element 290 may comprise a metal conductive film, e.g. a copper film. The second end 292 of these metal conductive films may be embedded into the conductive veils 232. In further examples, the first end 291 of the conductive elements 290 may be also embedded into the conductive veils 232.

The main body 220, the conductive assembly 280, and the lightning connector assembly 240 may be assembled before being placed on the blade shell mold. For example, these components may be infused together. In other examples, some of these components may be separately infused and then connected to each other to form the spar cap structure.

In further examples, at least some of these elements may be infused together with the blade shell in the blade shell mold.

In some examples, a conductive layer may be arranged to at least partially surround the main body 220 and the lightning connector assembly 240. The electrical connection between the different components that form the spar cap structure 210 may be improved. In some examples, the spar cap structure 210 may be encapsulated by the conductive layer. The conductive layer may comprise a layer having carbon fibers arranged in a biaxial configuration. In further examples, other types of fibers may also be arranged in the conductive layer. In still further examples, the conductive layer may comprise a copper mesh.

Figure 4B schematically represents a cross-sectional view of a spar cap structure arranged in a wind turbine blade according to an example of the present disclosure. The spar cap structure 210 of this example is similar to the spar cap structure 210 of figure 4A. For example, the lightning connector assembly 240 of this example may be according to any of the examples herein. However, the main body 220 of this example comprises a copper mesh 233 arranged on top of the carbon fiber pultrusions 231.

A single conductive element 290 is depicted in the cross-sectional view of Figure 4B. However, it should be appreciated that the spar cap structure 210 may comprise a plurality of conductive elements 290 distributed along the lengthwise direction 37. The second end 292 of the conductive element 290 is in contact with the copper mesh 233. The second end 292 thus overlaps the copper mesh 233. The conductive element 290 of this example is a metal conductive element. The metal conductive element of this example may be a metal conductive film, e.g. a copper film, or a thread of metal conductive wires, e.g. copper wires. The conductive element 290 may be arranged within the copper mesh 233. For example, the conductive wires, e.g. metal conductive wires, or carbon fibers may be stitched with the copper mesh 233.

In some examples, the conductive assembly 280 comprises some conductive elements 290 in contact with the copper mesh 233 and other conductive elements 290 in contact with the conductive veils 232.

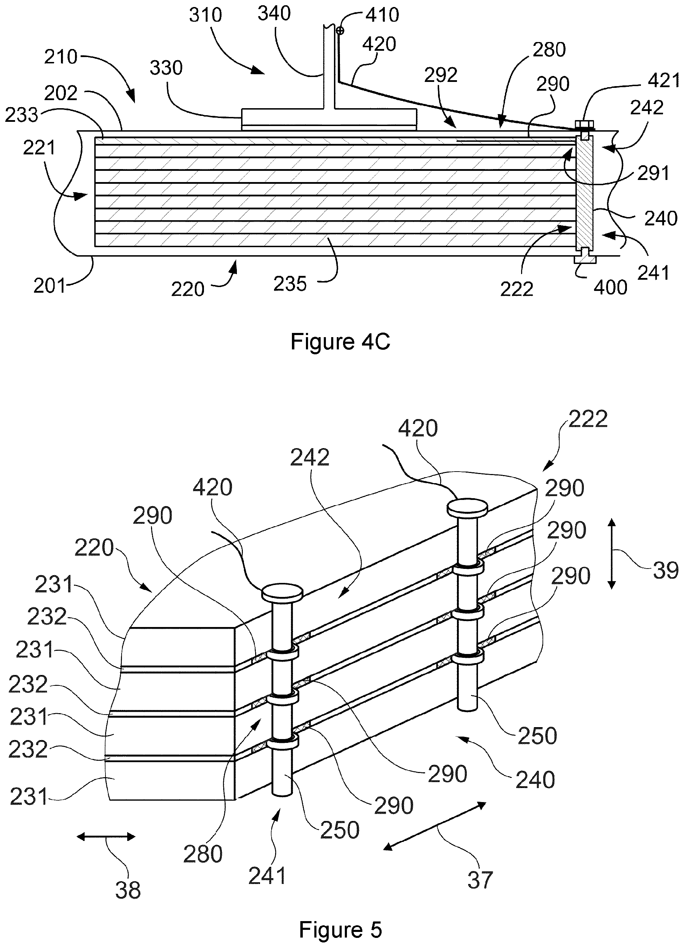

Figure 4C schematically represents a cross-sectional view of a spar cap structure arranged in a wind turbine blade according to another example of the present disclosure. The main body 220 of this example comprises a plurality of layers of carbon fiber components. The layers of this figure are carbon fiber fabric layers 235. The carbon fiber fabric layers 235 are arranged one on top of the other. Each of the carbon fiber fabric layers 235 of this example extends from the first side 221 to the second side 222 of the main body 220.

Furthermore, the main body 220 comprises a copper mesh 233 arranged on top of the carbon fiber fabric layers 235. The copper mesh 233 of this example may be according to any of the examples herein.

In the cross-sectional view of this figure, the conductive assembly 280 comprises a conductive element 290. However, it should be appreciated that a plurality of conductive elements 290 may be distributed along the lengthwise direction 37. The second end 292 of the conductive element 290 of this example is in contact with the copper mesh 233. For example, the second end 292 of the conductive element 290 may be embedded within the copper mesh 233.

Alternatively, or additionally, the conductive assembly may comprise conductive elements 290 distributed at different heights. The second ends 292 of these conductive elements 290 may be embedded into the carbon fiber fabric layers 235 or between two consecutive carbon fiber fabric layers 235.

Figure 5 schematically represents an isometric view of a part of a spar cap structure according to one example of the present disclosure. The main body 220 of this example comprises a plurality of carbon fiber pultrusions 231 arranged in rows. A conductive veil 232 is arranged between two consecutive rows of carbon fiber pultrusions. The conductive veils 232 and the carbon fiber pultrusions 231 may be according to any of the examples herein.

In this example, the lightning connector assembly 240 is arranged at the second side 222 of the main body 220. The lightning connector assembly 240 of this example comprises a plurality of elongated connectors 250 distributed along the lengthwise direction 37 of the spar cap structure. The lightning connector assembly 240 may comprise between 5 and 30 elongated connectors 250. In some examples, each elongated connector 250 is associated with a lightning receptor (not shown in this figure). The elongated connectors 250 may protrude from one side of the main body 220. In this example, the elongated connectors 250 protrude from the second side 222 of the main body 220.

In this example, the elongated connectors 250 extend a height between an outer end 241 and an inner end 242. In this example, the height of the elongated connectors 250 is greater than the thickness of the main body 220. The elongated connectors of this example protrude from the main body 220 and extend in a direction substantially parallel to the flapwise direction 39. This may simplify connecting a lightning receptor to the outer end 241 of the elongated connectors 250 and the connections of the inner end 242 to the down conductor through a cable 420.

In some examples, a foam material may be arranged between two consecutive elongated connectors 250. This foam material may thus fill the gap between two elongated connectors 250. In other examples, fibers, e.g. carbon and/or glass fibers, may be arranged between elongated connectors 250.

In this example, the plurality of elongated connectors 250 comprises a tubular shape, e.g. cylindrical shape. The elongated connectors 250 may comprise copper. The elongated connectors 250 may be hollow. This shape allows for good performance in terms of cost-effectiveness and electrical conductivity. In other examples, the elongated connectors 250 may be solid, e.g. a tubular solid elongated connector. The tubular shape further enhances the connection between the conductive assembly 280 and the elongated connectors 250.

The metal conductive assembly 280 of this example is a metal conductive assembly. In this figure, the metal conductive assembly comprises a plurality of conductive elements 290 distributed along the lengthwise direction 37. In this example, a group of conductive elements 290 is connected to each of the elongated connectors 250. The conductive elements 290 of each group are arranged at different heights relative to the thickness of the main body. The conductive elements 290 of this example extend from a first end 291 to a second end 292 in a direction substantially perpendicular to the chordwise direction 38. The second end 292 of these conductive elements 290 is arranged at the conductive veils 232, e.g. embedded within the conductive veils 232. The conductive elements 290 of this example may be made from metals, e.g. from copper.

In this example, the first end 291 of these conductive elements 290 is connected to the elongated connectors 250. The first end 291 of this example comprises a ring inserted into the elongated connector 250. This ring may thus establish the electrical connection between each conductive element 290 and the elongated connector 250 in an easy manner.

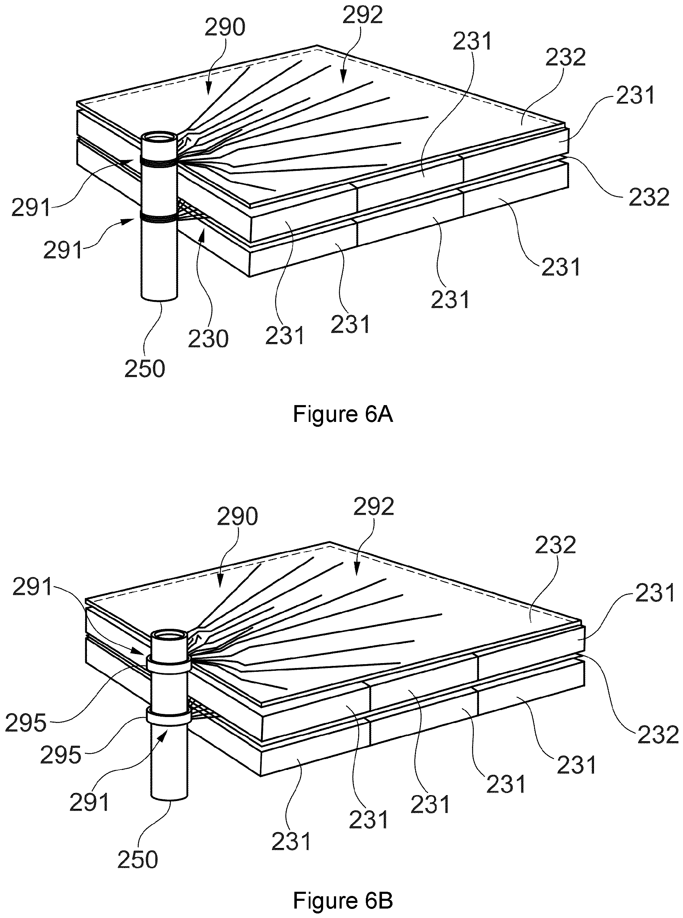

Figure 6A and 6B schematically represent examples of a part of spar cap structures according to the present disclosure. The spar cap structure of these examples comprises a plurality of carbon fiber pultrusions 231 arranged in rows. A conductive veil 232 is arranged between rows of carbon fiber pultrusions 231. In other examples, the main body may be formed by laying a plurality of carbon fiber fabrics arranged one on top of the other.

It should be noted that in these figures only a part of the spar cap structure is illustrated. For example, the spar cap structure may comprise further carbon fiber pultrusions 231 and conductive veils 232.

The conductive elements 290 of these examples comprise the second end 292 embedded within a conductive veil 232. The conductive elements 290 of these examples comprise a plurality of metal conductive wires, e.g. copper wires, arranged in threads of metal conductive wires. Each of these threads of metal conductive wires is arranged at a different conductive veil 232. In these examples, the second ends 292 of these threads of metal conductive wires are spread to increase the electrically conductive surface.

The first end 291 of the conductive elements 290 of these figures is connected to the elongated connector 250. In figure 6A, the first ends 291 of the conductive elements 290, e.g. metal conductive elements, are wrapped around the elongated connector 250. In figure 6B, each of the first ends 291 of the conductive elements 290 comprises a conductive ring 295. The conductive ring 295 may be inserted into the elongated connector 250. Assembling the spar cap structure may thus be simplified.

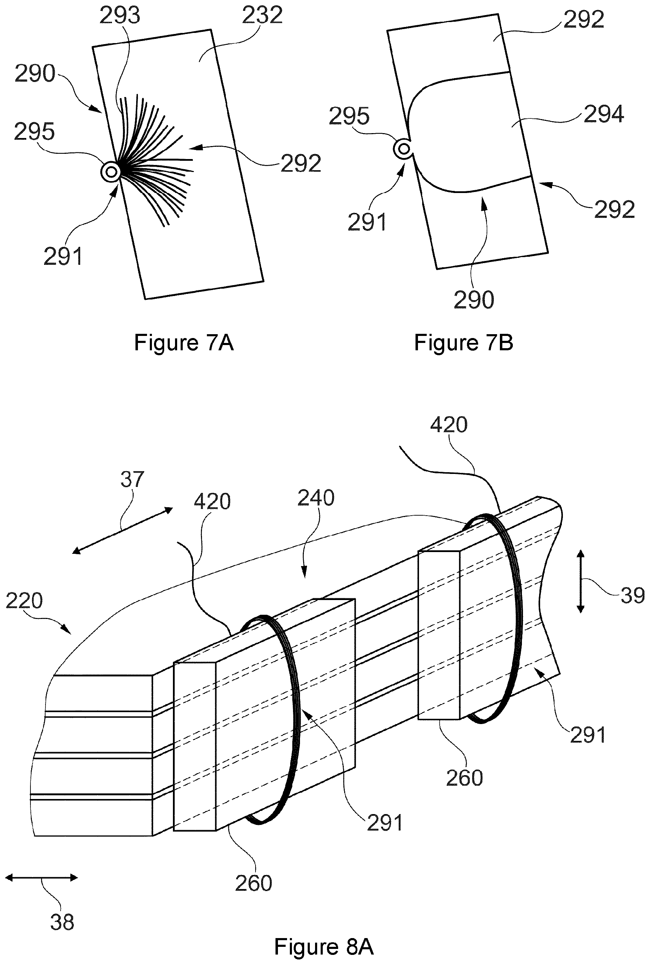

Figure 7A and 7B schematically represent examples of conductive elements according to the present disclosure. The conductive elements 290 of these figures extend from a first end 291 to a second end 292. In these examples, each of the first ends 291 comprises a conductive ring 295. In other examples, the first ends 291 may be wrapped around an elongated connector 250. The conductive elements 290 may be metal conductive elements according to any of the examples herein.

In these examples, each of the second ends 292 is embedded within a conductive veil 232. The conductive element 290 of figure 7A is a metal conductive element comprising a plurality of metal conductive wires 293 made from copper. The second end 292 of the metal conductive wires 293 are spread. The first end 291 of the metal conductive wires are threaded and connected to the conductive ring 295.

The conductive element 290 of figure 7B is a metal conductive element comprising a metal conductive film 294. The metal conductive film is arranged within the conductive veil 232. The metal conductive elements 290 of these figures may be arranged at any location according to the examples herein.

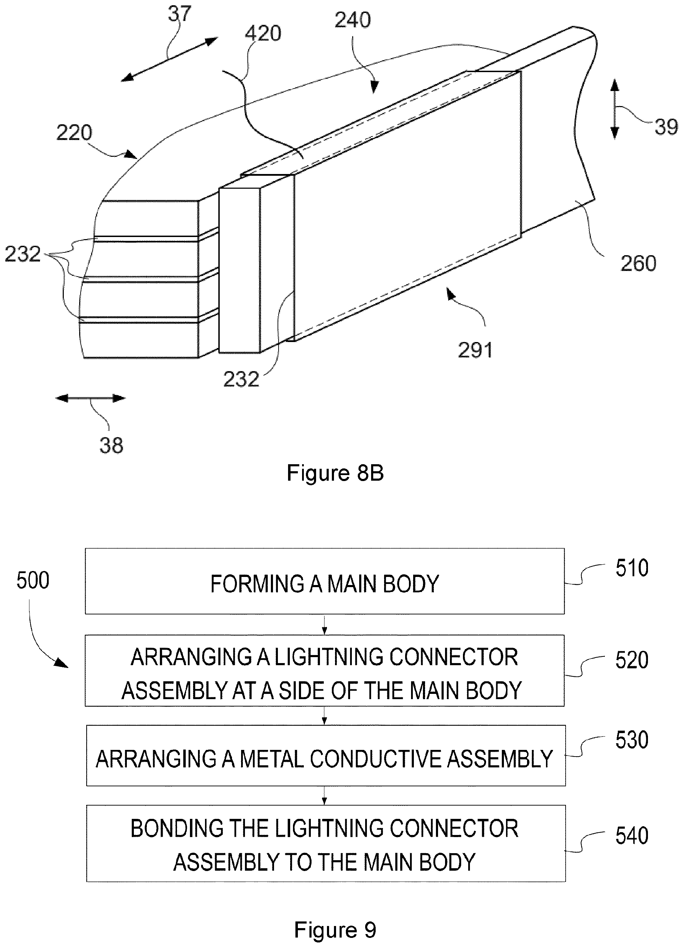

Figure 8A and 8B schematically represent examples of an isometric view of a part of a spar cap structure according to the present disclosure. The main body 220 of these examples is like the main body illustrated in Figure 5. In other examples, the main body 220 may be according to any of the examples herein.

The lightning connector assembly 240 of these examples comprise a plurality of strip connectors 260 extending a length along the lengthwise direction 37. The lightning connector assembly 240 may thus comprise a plurality of strip connectors 260 distributed along the lengthwise direction 37. In these examples, a gap is defined between two consecutive strip connectors 260. Each strip connector 260 may be associated with a lightning receptor and with a cable 420 to electrically connect the lightning receptor to the down conductor. In some examples, this gap may be filled with foam or with fibers. In other examples, this gap may be left empty. In other examples, the main body 220 extends a body length along the lengthwise direction 37 and the strip connector 260 comprises a strip length along the lengthwise direction 37. The strip length may substantially correspond to the body length. In other examples, the body length may be greater than the strip length.

As can be seen in these figures, the length of the strip connectors 260 may vary. The length of the strip connectors 260 of these examples is longer than its height and its width.

In figure 8A, the second ends 292 of the conductive elements 290 may be according to any of the examples disclosed herein. For example, the second ends 292 of Figure 8A may be according to the second ends 292 described with regards Figure 5. However, the first ends 291 of the conductive elements 290 wrap the strip connector 260. Each of the conductive elements 290 may thus be electrically connected to the corresponding strip connector 260. The first end 291 of the conductive elements 290 may thus comprise a bending portion. In the example of Figure 8A, the bending portion at least partially surrounds the strip connector 260.

The first ends 291 of the conductive elements 290 of Figure 8B are integrated into the corresponding conductive veil 232. A portion of the conductive veils 232 wraps the strip connector 260. The conductive veils 232 of this figure thus protrude from the main body 220 in a chordwise direction 38. The conductive veil 232 of this example may comprise a carbon biaxial fabric. The conductive elements 290 may be carbon fibers or metal conductive elements 290, e.g. a copper mesh and/or metal wires. The conductive elements 290 may thus be integrated into the carbon biaxial fabric. The first end 291 of the conductive elements, e.g. carbon fibers or metal conductive elements, within the conductive veil 232 may comprise a bending portion surrounding the strip connector 260. The length of the conductive veil 232 may correspond with the length of the strip connector 260.

In other examples, a conductive mesh of copper may protrude from the conductive veil 232 to wrap the strip connectors.

In further examples, the bending portion may extend along a gap formed between the side of the main body 220 and the strip connector 260. The bending portion may thus at least partially cover a portion of one of the sides of the main body to extend between the side and the strip connector 260.

Figure 9 is a block diagram of a method for manufacturing a spar cap structure according to one example of the present disclosure. The method 500 may be employed for manufacturing a spar cap structure 110, 210 according to any of the examples herein.

The method 500 comprises forming a main body 220 by stacking a plurality of layers of one or more carbon fiber components to define a thickness between a first side 221 and a second side 222 of the main body 220, as represented at block 510.

In some examples, carbon fiber fabrics may be laid on the spar cap mold to form the main body 220. In other examples, a plurality of carbon fiber pultrusions 231 may be arranged on the spar cap mold to form rows of carbon fiber pultrusions 231. A conductive veil 232 may be arranged between two consecutive rows of carbon fiber pultrusions 231.

The method 500 further comprises arranging a lightning connector assembly 240 at one side of the sides 221, 222 of the main body 220, wherein the lightning connector assembly 240 extends a height from an outer end 241 to an inner end 242 in a direction substantially parallel to the thickness of the main body 220, as represented at block 520. The outer end 241 is configured to be connected to a lightning receptor and the inner end 242 is configured to be connected to a down conductor of a lightning protection system of a wind turbine blade. The lightning connector assembly 240 may be arranged adjacent to one of the first 221 and the second sides 222 of the main body 220.

In some examples, arranging the lightning connector assembly 240 at one side 221, 222 of the main body 220 comprises arranging one or a plurality of strip connectors 260 in a lengthwise direction 37. In other examples, arranging the lightning connector assembly at one side 221, 222 of the main body 220 comprises arranging a plurality of elongated connectors distributed along the lengthwise direction 37.

Additionally, the method 500 comprises arranging a conductive assembly 280, e.g. a metal conductive assembly, to extend from the main body 220 to the lightning connector assembly 240 for electrically connecting the main body 220 to the lightning connector assembly 240, as represented at block 530. In some examples, arranging a conductive assembly 280 comprises placing a first end 291 of one or more conductive elements 290 in contact with the lightning connector assembly 240, and a second end 292 of the conductive elements 290 in contact with the main body 220. The conductive elements 290 may be metal conductive elements or carbon fiber conductive elements.

In some examples, the second end 292 of the conductive elements 290 may be connected to the carbon fiber components of the main body 220, e.g. embedded within carbon fiber fabrics. The second end 292 of the conductive elements 290 may be laid during or after the placement of the carbon fiber fabrics.

In some examples, the second end 292 of the conductive elements 290 may be electrically connected to the conductive veils 232. For example, the second ends 292 may be placed on the conductive veils 232. In other examples, the second ends 292 may be placed embedded within the conductive veils 232. The second ends 292 may be stitched with the fibers of the conductive veils 232. In these examples, the method may comprise connecting a second end 292 of one or more I conductive elements 290 to a conductive veil 232, and arranging the conductive veil 232 on a row of the carbon fiber pultrusions 231. Then, an additional row of carbon fiber pultrusions 231 may be arranged on the conductive veil 232. An additional conductive veil 232 connected to a second end 292 of additional conductive elements 290 are placed above this additional row of carbon fiber pultrusions 231. Further rows of carbon fiber pultrusions 231 and conductive veils 232 may be stacked to form the main body 220.

In some examples, the first end 291 of the conductive elements 290 comprises a conductive ring 295. In some examples, arranging the conductive assembly 280 comprises inserting the conductive ring 295 into an elongated connector 250.

In some examples, arranging the conductive assembly 280 comprises wrapping a first end 291 around an elongated connector 250. In further examples, the first end 291 may be bent and placed between the side of the main portion and the strip connector 260 or wrapped around the strip connector 260.

The method 500 further comprises bonding the lightning connector assembly 240 to the main body 220, as represented at block 540. The main body 220 and the lightning connector assembly 240 may be infused together. The conductive assembly 280 may also be infused together with the main body 220 and the lightning connector assembly 240. Resin may thus be injected into the spar cap mold to fill the gaps between the layers forming the main body 220 and the lightning connector assembly 240. Then, this resin is cured to form a prefabricated spar cap structure 110, 210. This may help to automatize the manufacturing process and arranging the stacks on the outer layer may be simplified. Accordingly, the spar cap structure 110, 210 may be prefabricated before being arranged on top of the outer layer 101, 201 placed on the blade mold. Furthermore, the electrical connections may be simplified. In other examples, the lightning connector assembly 240 may be attached to an infused main body 220 to form a prefabricated spar cap.

In further examples, the main body and the lightning connector assembly 240 may be placed in a blade shell mold to be infused together with the blade shell.

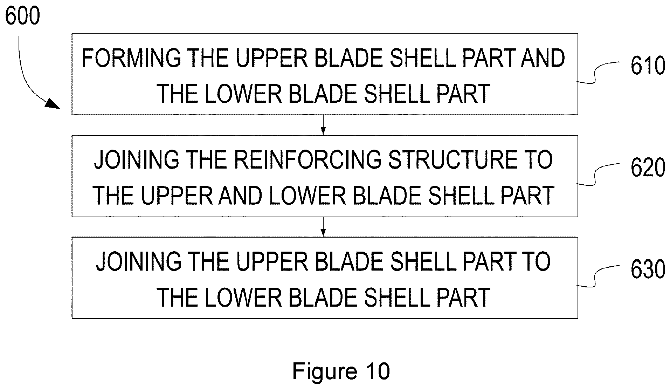

Figure 10 is a block diagram of a method for manufacturing a wind turbine blade according to one example of the present disclosure. The method 600 may be used for manufacturing a wind turbine blade according to any of the examples herein. These wind turbine blades include a spar cap structure 110, 210 according to any of the examples herein.

The method 600 comprises forming the upper blade shell part 100 and the lower blade shell part 200, as represented at block 610. Forming the upper blade shell part 100 and the lower blade shell part 200 comprises arranging the spar cap structure 110, 210 on an outer layer laid in a blade shell part mold and bonding the spar cap structure 110, 210 to the outer layer 201.

The method 600 may comprise laying the outer layer 101, 201 in a blade shell mold, e.g. laying one or more glass fiber laminates. These glass fiber laminates may comprise bidirectional glass fibers. The spar cap structure 110, 210 may then be laid on the outer layer 101, 201.

As previously explained, the spar cap structure 110, 210 may be pre-bonded or prefabricated before being arranged on top of the outer layer 101, 201. Alternatively, spar cap may be formed on the outer layer 101, 201. The spar cap structure may be manufactured according to any of the examples herein.

Then, the inner layer 102, 202 may be laid on top of the spar cap structure 110, 210. The inner layer 102, 202 may comprise one or more glass fiber laminates, e.g. having bidirectional glass fibers.

In some examples, a core structure or a plurality of core structures may be placed adjacent to the spar cap structure 110, 210. The inner layer may be placed on top of these core structures.

The spar cap structure 110, 210 (prefabricated or directly arranged on top of the outer layer) may be bonded to the outer layer 101, 201 and to the inner layer 102, 202 to form the blade shell part 100, 200. In some examples, bonding the spar cap structure 110, 210 to the outer layer 101, 201 and to the inner layer 102, 202 comprises molding the inner layer, the spar cap structure and the outer layer together with a resin infusion technology. Once the inner layer covers the spar cap structure and the outer layer, resin is injected into the mold cavity under pressure. This resin fills the volume between the stacks and the layers. Then, the resin is cured or hardened. Accordingly, the spar cap structure may be bonded to the inner layers and to the outer layers by using a resin infusion process. After curing, a blade shell part may be obtained.

The method 600 further comprises joining the reinforcing structure 300 to the upper blade shell part 100 and to the lower blade shell part 200 such that the reinforcing structure 300 is arranged between the upper blade shell part 100 and the lower blade shell part 200, as represented at block 620. The first reinforcing beam 310 may thus be joined to the upper and to the lower blade shell parts. The lower flange 330 of the first reinforcing beam 310 may be joined to the lower blade shell part 200 and the upper flange 320 of the first reinforcing beam 310 to the upper blade shell part 100.

Joining the flanges 320, 330 with the corresponding blade shell part 100, 200 may comprise adhering or bonding the flanges 320, 330 to the corresponding inner layers 102, 202 of the blade shell parts 100, 200. An adhesive layer may thus be formed between the flanges 320, 330 and the inner layers 102, 202.

At block 630, joining the upper blade shell part 100 to the lower blade shell part 200 is represented. The blade shell parts may be bonded together through bonding lines formed at the leading edge 53 and at the trailing edge 54.

In some examples, the method 600 further comprises inserting a plurality of lightning receptors into the lightning connector assembly 240, e.g. into the outer end 241 of the lightning connector assembly 240. The lightning receptors 400 may be positioned at different locations of the wind turbine blade along the spanwise direction 37. In some examples, the lightning receptors 400 may be arranged at both the upper blade shell part 100 and the lower blade shell part 200.

In some examples, inner end 242 of the lightning connector assembly 240 may be connected to the down conductor, e.g. through a cable.

For reasons of completeness, various aspects of the present disclosure are set out in the following numbered clauses:
Clause 1: A spar cap structure for a wind turbine blade, the spar cap structure comprising:
   a main body comprising a first side and a second side, wherein the main body comprises a plurality of layers of one or more carbon fiber components, each of these layers is arranged one on top of the other to define a thickness of the main body between the first and the second sides;
   a lightning connector assembly arranged at one of the sides of the main body, wherein the lightning assembly extends a height from an outer end to an inner end in a direction substantially parallel to the thickness of the main body; wherein the outer end is configured to be connected to a lightning receptor and the inner end is configured to be connected to a down conductor of a lightning protection system of a wind turbine blade; and
   a conductive assembly extending from the main body to the lightning connector assembly to electrically connect the main body to the lightning connector assembly.
Clause 2: The spar cap according to clause 1, wherein the lightning connector assembly comprises a plurality of elongated connectors distributed along a lengthwise direction of the spar cap.
Clause 3: The spar cap according to clause 1, wherein the lightning connector assembly comprises a strip connector extending a length along a lengthwise direction of the spar cap.
Clause 4: The spar cap according to any of clauses 1-3, comprising a conductive layer at least partially surrounding the lightning connector assembly and the main body.
Clause 5: The spar cap according to any of clauses 1 - 4, wherein the conductive assembly comprises conductive elements comprising a first end connected to the lightning connector assembly and a second end connected to the layers of carbon fiber components.
Clause 6: The spar cap according to clause 5, wherein the conductive assembly comprises a plurality of conductive elements distributed along a lengthwise direction of the spar cap.
Clause 7: The spar cap according to clause 6, wherein the layers of one or more carbon fiber components comprise carbon fiber fabric layers, and wherein the second end of the conductive elements are embedded into the carbon fiber fabric layers.
Clause 8: The spar cap according to any of clauses 5 - 6, wherein each of the layers of one or more carbon fiber components comprise a row of one or more carbon fiber pultrusion.
Clause 9: The spar cap according to clause 8, wherein the conductive assembly comprises conductive elements distributed along the thickness of the main body.
Clause 10: The spar cap according to any of clauses 8 - 9, wherein the body comprises a conductive veil arranged between two consecutive rows of carbon fiber pultrusion, and wherein the second end of the conductive elements is embedded into the conductive veils.
Clause 11: The spar cap according to any of clauses 5 - 10, wherein the conductive elements comprise a plurality of threads of metal conductive wires, optionally copper wires.
Clause 12: The spar cap according to any of clauses 5 - 10, wherein the metal conductive elements comprise metal conductive films, optionally copper films.
Clause 13: The spar cap according to any of clauses 5 - 12, wherein the first ends comprise a conductive ring.
Clause 14: The spar cap according to clause 13, wherein the connector assembly comprises a plurality of elongated connectors distributed along a lengthwise direction of the spar cap, and wherein the conductive rings are arranged surrounding the elongated connectors.
Clause 15: The spar cap according to any of clauses 5 - 12, wherein the connector assembly comprises a plurality of elongated connectors distributed along a lengthwise direction of the spar cap, and wherein the first ends are wrapped around the elongated connectors.
Clause 16: The spar cap according to any of clauses 5 - 12, wherein the first ends comprise a bending portion to at least partially cover a portion of the one of the sides of the main body.
Clause 17: A wind turbine blade extending in a lengthwise direction, the wind turbine blade comprising:
   an upper blade shell part
   a lower blade shell part joined to the upper blade shell part;
   a reinforcing structure between the upper blade shell part and the lower blade shell; and
   wherein the upper blade shell part and/or the lower blade shell part comprises a spar cap structure according to any of clauses 1 - 16.
Clause 18: A method for manufacturing a spar cap structure comprising:
   forming a main body by stacking a plurality of layers of one or more carbon fiber components to define a thickness between a first side and a second side of the main body;
   arranging a lightning connector assembly at one side of the sides of the main body, wherein the lightning connector assembly extends a height from an outer end to an inner end in a direction substantially parallel to the thickness of the main body; wherein the outer end is configured to be connected to a lightning receptor and the inner end is configured to be connected to a down conductor of a lightning protection system of a wind turbine blade;
   arranging a conductive assembly to extend from the main body to the lightning connector assembly for electrically connecting the main body to the lightning connector assembly, and
   bonding the lightning connector assembly to the main body.
Clause 19: The method according to clause 18 wherein bonding the lightning connector assembly comprises infusing the lightning connector assembly together with the main body.
Clause 20: A method for manufacturing a wind turbine blade according to clause 17, comprising:
   forming the upper blade shell part and the lower blade shell part, wherein forming the upper blade shell part and/or the lower blade shell part comprises:
      arranging the spar cap structure on an outer layer laid in a blade shell part mold; and
      bonding the spar cap structure to the outer layer;
   joining the reinforcing structure to the upper blade shell part and to the lower blade shell part such that the reinforcing structure is arranged between the upper blade shell part and the lower blade shell part, and
   joining the upper blade shell part to the lower blade shell part.

This written description uses examples to disclose the invention, including the preferred embodiments, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims. Aspects from the various embodiments described, as well as other known equivalents for each such aspects, can be mixed and matched by one of ordinary skill in the art to construct additional embodiments and techniques in accordance with principles of this application. If reference signs related to drawings are placed in parentheses in a claim, they are solely for attempting to increase the intelligibility of the claim, and shall not be construed as limiting the scope of the claim.

## Claims

1. A spar cap structure (110, 210) for a wind turbine blade (7), the spar cap structure (110, 210) comprising:
a main body (220) comprising a first side (221) and a second side (222), wherein the main body (220) comprises a plurality of layers of one or more carbon fiber components, each of these layers is arranged one on top of the other to define a thickness of the main body (220) between the first (221) and the second sides (222);
a lightning connector assembly (240) arranged at one of the sides (221, 222) of the main body (220), wherein the lightning connector assembly (240) extends a height from an outer end (241) to an inner end (242) in a direction substantially parallel to the thickness of the main body (220); wherein the outer end (241) is configured to be connected to a lightning receptor and the inner end (242) is configured to be connected to a down conductor of a lightning protection system of a wind turbine blade (7); and
a conductive assembly (280) extending from the main body (220) to the lightning connector assembly (240) to electrically connect the main body (220) to the lightning connector assembly (240).

2. The spar cap structure (110, 210) according to claim 1, wherein the lightning connector assembly (240) comprises a plurality of elongated connectors (250) distributed along a lengthwise direction (37) of the spar cap structure (110, 210).

3. The spar cap structure (110, 210) according to claim 1, wherein the lightning connector assembly (240) comprises a strip connector (260) extending a length along a lengthwise direction (37) of the spar cap structure (110, 210).

4. The spar cap structure (110, 210) according to any of claims 1 - 3, wherein the conductive assembly (280) comprises conductive elements (290) comprising a first end connected (291) to the lightning connector assembly (240) and a second end (292) connected to the layers of carbon fiber components.

5. The spar cap structure (110, 210) according to claim 4, wherein the conductive assembly (280) comprises a plurality of conductive elements (290) distributed along a lengthwise direction (37) of the spar cap structure (110, 210).

6. The spar cap structure (110, 210) according to claim 5, wherein the layers of one or more carbon fiber components comprise carbon fiber fabric layers (235), and wherein the second end (292) of the conductive elements (290) are embedded into the carbon fiber fabric layers (235).

7. The spar cap structure (110, 210) according to any of claims 4 - 5, wherein each of the layers of one or more carbon fiber components comprise a row of one or more carbon fiber pultrusions (231).

8. The spar cap structure (110, 210) according to claim 7, wherein the conductive assembly (280) comprises conductive elements (290) distributed along the thickness of the main body (220).

9. The spar cap structure (110, 210) according to any of claims 7 - 8, wherein the main body (220) comprises a conductive veil (232) arranged between two consecutive rows of carbon fiber pultrusions (231), and wherein the second end (292) of the conductive elements (290) are embedded into the conductive veils (232).

10. The spar cap structure (110, 210) according to any of claims 4-9, wherein the conductive elements (290) comprise a plurality of threads of metal conductive wires (293), optionally copper wires.

11. The spar cap structure (110, 210) according to any of claims 4 - 9, wherein the conductive elements (290) comprise metal conductive films (294), optionally copper films.

12. The spar cap structure (110, 210) according to any of claims 4 - 11, wherein the first ends (291) comprise a conductive ring (295).

13. The spar cap structure (110, 210) according to any of claims 4 - 11, wherein the lightning connector assembly (240) comprises a plurality of elongated connectors (250) distributed along a lengthwise direction (37) of the spar cap structure (110, 210), and wherein the first ends (291) are wrapped around the elongated connectors (250).

14. A wind turbine blade (7) extending in a lengthwise direction (37), the wind turbine blade (7) comprising:
an upper blade shell part (100);
a lower blade shell part (200) joined to the upper blade shell part (100);
a reinforcing structure (300) between the upper blade shell part (100) and the lower blade shell (200); and
wherein the upper blade shell part (100) and/or the lower blade shell part (200) comprises a spar cap structure (110, 210) according to any of claims 1 - 13.

15. A method (500) for manufacturing a spar cap structure (110, 210) comprising:
forming (510) a main body (220) by stacking a plurality of layers of one or more carbon fiber components to define a thickness between a first side (221) and a second side (222) of the main body (220);
arranging (520) a lightning connector assembly (240) at one side of the sides (221, 222) of the main body (220), wherein the lightning connector assembly (240) extends a height from an outer end (241) to an inner end (242) in a direction substantially parallel to the thickness of the main body (220); wherein the outer end (241) is configured to be connected to a lightning receptor and the inner end (242) is configured to be connected to a down conductor of a lightning protection system of a wind turbine blade (7);
arranging (530) a conductive assembly (280) to extend from the main body (220) to the lightning connector assembly (240) for electrically connecting the main body (220) to the lightning connector assembly (240), and
bonding (540) the lightning connector assembly (240) to the main body (220).
